Europäisches Patentamt

(19) European Patent Office

Office européen des brevets

(11) Numéro de publication : **0 100 714**
**B1**

(12) **FASCICULE DE BREVET EUROPÉEN**

(45) Date de publication du fascicule du brevet :
26.03.86

(21) Numéro de dépôt : **83401500.0**

(22) Date de dépôt : **21.07.83**

(51) Int. Cl.⁴ : **A 01 J 25/00**, A 01 J 25/11

(54) **Procédé et équipement pour le remplissage d'un bac à fromage à pâte pressée.**

(30) Priorité : **03.08.82 FR 8213545**

(43) Date de publication de la demande :
**15.02.84 Bulletin 84/07**

(45) Mention de la délivrance du brevet :
**26.03.86 Bulletin 86/13**

(84) Etats contractants désignés :
**AT BE CH DE GB IT LI NL**

(56) Documents cités :
**EP-A- 0 056 536**
**DE-A- 2 221 838**
**FR-A- 1 337 086**
**FR-A- 2 118 251**
**FR-A- 2 142 275**

(73) Titulaire : **PIERRE GUERIN S.A.**
**B.P. 12**
**F-79210 Mauze sur le Mignon (FR)**

(72) Inventeur : **Quilliou, Guy**
**20, Square des Frères Montgolfier**
**F-79000 Niort (FR)**

(74) Mandataire : **Fontanié, Etienne**
**FIVES-CAIL BABCOCK 7, rue Montalivet**
**F-75383 Paris Cedex 08 (FR)**

EP 0 100 714 B1

## Description

La présente invention concerne les bacs utilisés pour l'égouttage, le pressage et le tranchage du caillé destiné à la production de fromages à pâte pressée. Ces bacs qui ont une section rectangulaire sont constitués par deux parois longitudinales, deux parois d'extrémité et une paroi de fond perméable et comportent une cloison transversale déplaçable définissant avec les parois longitudinales et une paroi d'extrémité, le volume utile du bac ; l'une des parois d'extrémité est mobile et peut être ouverte pour permettre l'évacuation du gâteau de caillé pressé.

Le remplissage de ces bacs est généralement effectué au moyen de rampes fixes ou animées de mouvements alternatifs et placées au-dessus du bac. Bien que les cuves contenant le caillé soient généralement munies de dispositifs d'homogénéisation, la concentration en grains de caillé du mélange de caillé et sérum varie du début à la fin de l'opération de remplissage. De plus, le débit d'alimentation peut aussi varier si le caillé s'écoule par gravité de la cuve dans le bac. Pour toutes ces raisons, le caillé ne se répartit pas de manière homogène dans le bac et les fromages obtenus par découpage du gâteau de caillé, après pressage, n'ont pas une teneur en humidité et un poids uniformes.

On peut remédier à cet inconvénient en égalisant manuellement le caillé dans le bac avec un râteau, mais cette opération augmente les temps de fabrication et diminue la productivité.

Plus particulièrement, l'invention a pour objet un procédé de remplissage d'un bac du type décrit dans le document EP-A-0 056 536 et dans lequel la paroi de fond perméable est constituée par un tapis filtrant, déplaçable longitudinalement dans le bac, et la cloison transversale est fixée sur l'extrémité du tapis filtrant et déplaçable avec celui-ci, ce bac étant équipé d'une rampe d'alimentation disposée longitudinalement et d'une rehausse placée sur la cloison transversale. Le remplissage de ce bac est effectué de façon classique, au moyen de la rampe qui est mobile et que l'on dispose pour cette opération dans le plan médian longitudinal du bac. On a exposé ci-dessus les inconvénients de ce mode de remplissage.

Le but de l'invention est de réaliser, sans aucune intervention manuelle, le remplissage homogène d'un bac à fromage de ce type.

Conformément à l'invention, on amène d'abord la cloison transversale près de la paroi d'extrémité mobile du bac, à une distance prédéterminée de celle-ci, on introduit ensuite le mélange de caillé et de sérum dans l'espace ménagé entre la cloison et la paroi d'extrémité mobile et on déplace enfin la cloison en l'éloignant de ladite paroi mobile, en commandant les déplacements du tapis suivant un programme préétabli en fonction des variations de la composition du mélange jusqu'à ce que ladite cloison atteigne une position extrême correspondant au volume total de mélange de caillé et de sérum que le bac doit contenir.

La cloison peut être déplacée en continu, sa vitesse de déplacement étant réglée automatiquement, soit à partir de mesures donnant à chaque instant ou périodiquement la valeur de la concentration en grains de caillé du mélange caillé-sérum et le débit du mélange, soit à partir de valeurs de ces grandeurs prédéterminées par des essais préalables.

La cloison peut aussi être déplacée par intermittence, les temps de marche et d'arrêt étant prédéterminés en fonction des variations de ces paramètres. Les temps de marche peuvent diminuer et les temps d'arrêt augmenter du début à la fin de l'opération de remplissage. Toutes les périodes comportant un temps de marche et un temps d'arrêt peuvent avoir la même durée.

Pour la mise en œuvre de ce procédé on utilisera une rampe d'alimentation disposée transversalement près de la paroi mobile ou sur celle-ci, une rehausse montée sur des moyens de support mobiles lui permettant de se déplacer avec la cloison transversale le long du bac et un automate programmable pour commander le moteur d'entraînement du tapis et pour déplacer pendant le remplissage la cloison transversale et la rehausse depuis une position voisine de la paroi mobile jusqu'à une position extrême correspondant au volume total du mélange de caillé et de sérum que le bac doit recevoir.

Suivant un mode de réalisation particulier de l'invention, la rampe est logée dans la paroi d'extrémité mobile et incorporée à une paroi filtrante doublant intérieurement ladite paroi d'extrémité. La rampe est raccordée à des tubes verticaux et des boisseaux disposés à l'extrémité inférieure de ces tubes contrôlent la communication entre lesdits tubes et l'intérieur du bac à travers des orifices prévus dans la partie inférieure de la paroi filtrante. On pourra en particulier utiliser des boisseaux tournants fixés sur une barre horizontale supportée à ses extrémités par des bras montés sur la paroi filtrante de façon à pivoter autour d'un axe horizontal, des moyens étant prévus pour commander la rotation desdits bras.

D'autres caractéristiques de l'invention apparaîtront à la lecture de la description qui suit en se référant aux dessins l'accompagnant qui montrent à titre d'exemple non limitatif, deux modes de réalisation de l'invention et sur lesquels :

La figure 1 est une vue schématique, en coupe longitudinale, d'un bac à fromage auquel s'applique l'invention ;

La figure 2 est une vue en coupe, à plus grande échelle, de l'extrémité du bac équipé de la rampe d'alimentation ; et

La figure 3 montre, en perspective et en coupe, une autre forme de réalisation dans laquelle la rampe d'alimentation est logée dans la paroi d'extrémité mobile.

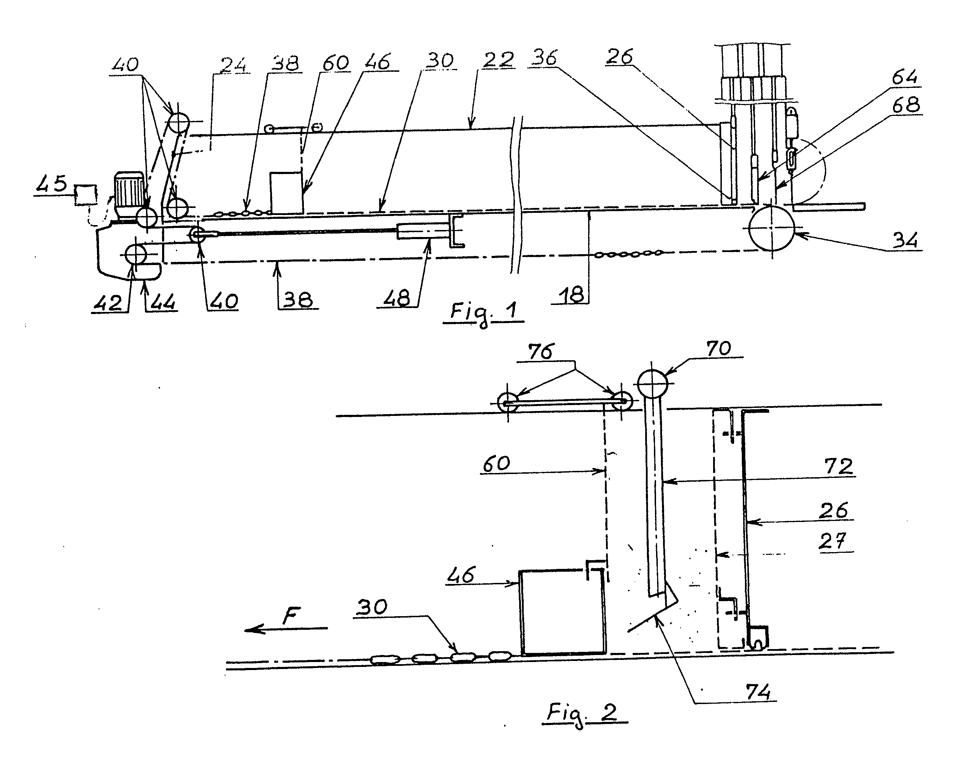

Le bac représenté sur la figure 2 a une section rectangulaire, sa longueur étant nettement supérieure à sa largeur. Il est formé d'un fond 18, de deux parois longitudinales 22 solidaires du fond et de deux parois d'extrémité dont l'une 24 est fixée au fond et aux parois 22 et l'autre 26 est mobile et constitue une porte que l'on peut ouvrir pour extraire le gâteau de caillé pressé.

Le fond du bac est recouvert d'un tapis filtrant 30, et comporte des rainures longitudinales aboutissant à des collecteurs pour l'évacuation du sérum ayant filtré à travers le tapis. Celui-ci a une longueur supérieure à celle du bac et passe sous la paroi 26 pour venir s'enrouler sur un tambour de renvoi 34 monté fou à l'avant du bac. Un joint gonflable 36 placé au bas de la paroi 26 permet d'assurer l'étanchéité entre celle-ci et le tapis 30. La paroi 26 est doublée intérieurement par une paroi filtrante 27 permettant l'évacuation d'une partie du sérum.

Le tapis filtrant peut être déplacé sur le fond du bac, dans le sens de sa longueur, au moyen de deux chaînes 38 qui sont accrochées à ses deux extrémités et passent sur des poulies 40 montées folles sur le bac, en contournant la paroi 24, et sur deux roues 42 clavetées sur un arbre qui peut être entraîné en rotation par un groupe moto-réducteur 44 ; la jante des roues 42 est conformée pour recevoir et entraîner sans glissement les chaînes 38. Deux des poulies 40 sont reliées à un vérin 48 qui permet de maintenir tendus les chaînes 38 et le tapis 30. Le moteur du groupe 44 est commandé par un automate programmable 45.

Sur l'extrémité du tapis 30 situé à l'intérieur du bac est fixée une cloison transversale 46 que l'on peut déplacer le long du bac, avec le tapis 30, pour modifier le volume utile du bac.

Pendant le remplissage du bac et l'égouttage du caillé, une rehausse 60 constituée par une tôle perforée est fixée sur la cloison 46.

Des couteaux verticaux 64 et un couteau transversal 68 placés devant la paroi 26 permettent de découper le gâteau de caillé en blocs parallélépipédiques lorsqu'il est extrait du bac.

Pour le remplissage du bac, une rampe d'alimentation 70 est placée derrière la paroi 26, parallèlement à celle-ci. Cette rampe est constituée par un tube horizontal auquel sont raccordés des tubes verticaux 72 munis à leur extrémité inférieure d'un disque brise-jet 74 disposé sous cette extrémité. Cette rampe, qui reste fixe pendant le remplissage, est supportée, par exemple par une potence pivotante, de façon à pouvoir être escamotée latéralement pour permettre le pressage.

La rampe 70 est donc mise en place dans le bac juste avant le remplissage et, simultanément, la cloison 46 est amenée près de la paroi 26, en mettant en marche le moteur 44 qui commande les déplacements du tapis 30, comme représenté sur la figure 2. La rehausse 60 est alors mise en place sur la cloison 46. Cette rehausse est supportée par des galets 76 roulant sur le bord supérieur des parois longitudinales 22 et est liée à la cloison 46 de façon à la suivre dans ses déplacements. Si nécessaire, des moyens seront prévus pour reprendre les efforts tendant à soulever la rehausse ou à la faire basculer ; on pourra utiliser pour cela des galets prenant appui sur la face inférieure d'un rebord des parois 22.

Conformément à l'invention, la cloison 46 est déplacée avec le tapis 30, pendant le remplissage, suivant un programme préétabli permettant de répartir le caillé uniformément dans le bac en dépit des variations de la composition du mélange de caillé et de sérum et éventuellement du débit d'alimentation, la rampe restant en position fixe et étant alimentée en permanence pendant le remplissage. Le déplacement est effectué dans le sens de la flèche F de la figure 2, c'est-à-dire que la cloison 46 s'éloigne de la paroi 26.

La cloison 46 peut être déplacée en continu, le programme contrôlant alors sa vitesse de déplacement. Mais cette solution impose l'emploi d'un moteur à vitesse variable pour l'entraînement du tapis 30.

Une solution moins onéreuse et tout aussi efficace consiste à déplacer la cloison par intermittence en contrôlant les temps de déplacement et les temps d'arrêt. Cette solution a l'avantage de pouvoir être mise en œuvre avec un moteur à vitesse constante.

On peut, par exemple, diviser le temps total de remplissage, qui est déterminé à partir du volume de caillé à traiter et du débit d'alimentation, en un certain nombre de périodes de temps égales et, dans chaque période, un temps relativement court sera consacré au déplacement de la cloison 46 qui sera maintenu à l'arrêt pendant le reste du temps. A titre d'exemple, chaque période peut être de 18 secondes, le moteur commandant le déplacement de la cloison 46 étant mis en marche pendant 3 secondes et la cloison étant maintenue à l'arrêt pendant 15 secondes. La durée de marche du moteur dépend évidemment de la longueur du volume utile du bac et de la vitesse de déplacement de la cloison. Les temps de marche et d'arrêt sont prédéterminés par des essais préalables.

Une solution améliorée consiste à réduire du début à la fin du remplissage la fraction de chaque période consacrée au déplacement de la cloison 46. Avec un moteur d'entraînement à vitesse constante cela revient à réduire la longueur du déplacement de la cloison à chaque pas. On pourra par exemple, déplacer la cloison pendant 4 secondes et la maintenir à l'arrêt pendant 14 secondes, au début du remplissage, ces temps devenant respectivement 2,5 secondes et 15,5 secondes en fin de remplissage. Cette solution permet de tenir compte, de façon relativement simple, de la diminution de la concentration en grains de caillé du mélange sérum-caillé pendant la vidange de la cuve contenant le mélange alimentant le bac. Elle permet aussi de prendre en compte la diminution du débit lorsque l'alimentation du bac se fait par gravité à partir d'une cuve en charge. On obtiendrait les mêmes avantages en adoptant un pas d'avance constant pour la cloison 46 et en augmentant les temps d'arrêt de la cloison du début à la fin du remplissage. Par exemple, pour remplir un bac à fromage ayant une longueur utile de 5,55 m, avec 5 000 litres d'un mélange de caillé et de sérum, on effectue 96 pas de 5,8 cm en faisant varier les temps d'arrêt par paliers, chaque palier comprenant le même nombre de pas. Pour le premier palier les temps d'arrêt sont de 1.6 s, pour le deuxième de 1,7 s, pour le troisième de 1,8 s, pour le quatrième 1,9 s et pour le cinquième de 2,1 s. Le temps d'avance du tapis est constant et égal à 0,9 s.

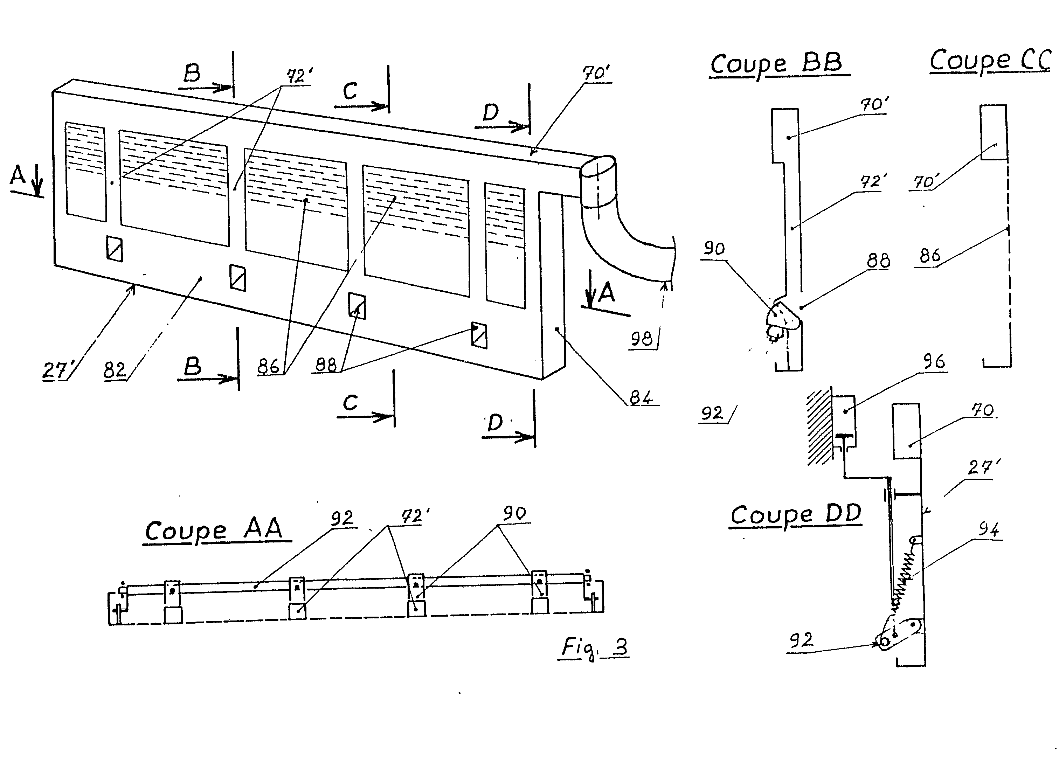

Dans le mode de réalisation illustré par la figure 3, la rampe d'alimentation 70' est logée dans la paroi d'extrémité mobile 26 et, plus précisément, incorporée à la paroi filtrante 27' doublant celle-ci. La rampe 70' qui est horizontale et les tubes verticaux 72' raccordés à celle-ci ont une section rectangulaire. La partie inférieure des tubes 72' est soudée à une bande de tôle 82, et des montants verticaux 84 sont soudés sur la rampe 70' et sur la bande 82, à leurs extrémités. Les parties vides du châssis ainsi constitué sont garnies de panneaux filtrants 86. Cet ensemble se monte sur la face intérieure de la paroi 26, à la place de la paroi filtrante 27 du mode de réalisation décrit plus haut.

Les tubes verticaux 72' débouchent à l'intérieur du bac par des orifices 88 découpés dans la partie inférieure 82 de la paroi 27'. La communication entre les tubes 72' et l'intérieur du bac est contrôlée par des boisseaux 90 fixés sur une barre horizontale 92 qui est supportée à ses extrémités par deux bras montés sur la paroi 27' de façon à pouvoir pivoter autour d'un axe horizontal et parallèle au plan de la paroi. La barre 92 est sollicitée vers le haut par deux ressorts 94 et un vérin 96 permet de la déplacer vers le bas. Lorsque le vérin 96 est sous pression, les boisseaux occupent la position représentée sur la coupe B-B de la figure 3 et les tubes 72' communiquent avec l'intérieur du bac, à travers les orifices 88. Dans cette position, les boisseaux présentent une face supérieure inclinée qui facilite l'écoulement du mélange de caillé et du sérum à travers les orifices 88. Lorsqu'on coupe l'alimentation du vérin 96, les boisseaux viennent obturer les tubes 72' et les orifices 88.

La rampe 70' est raccordée à un tuyau souple d'alimentation 98.

Cette construction intégrée permet d'éliminer les inconvénients dus au fait que, dans le premier mode de réalisation décrit, les tubes verticaux raccordés à la rampe plongent dans le caillé pendant le remplissage et doivent en être retirés lorsque cette opération est terminée et que la rampe, lorsqu'elle est en position escamotée sur un côté du bac, gêne l'accès à ce dernier. De plus, dans le dernier mode de réalisation décrit, la rampe peut rester raccordée au tuyau d'alimentation lorsqu'elle n'est pas utilisée.

## Revendications

1. Procédé de remplissage d'un bac à fromage de section rectangulaire constitué par deux parois longitudinales (22), deux parois d'extrémité (24, 26), dont l'une (26) est mobile pour permettre l'extraction du gâteau de caillé pressé, et une paroi de fond perméable formée par un tapis filtrant (30) déplaçable longitudinalement dans le bac et comprenant une cloison transversale (46) fixée sur l'extrémité du tapis filtrant (30) et déplaçable avec celui-ci caractérisé en ce qu'il consiste à amener d'abord la cloison transversale (46) près de la paroi d'extrémité mobile (26) du bac à une distance prédéterminée de celle-ci, à introduire ensuite le mélange de caillé et de sérum dans l'espace ménagé entre ladite cloison (46) et ladite paroi d'extrémité mobile (26) et à déplacer enfin ladite cloison (46) en l'éloignant de ladite paroi mobile (26), en commandant les déplacements du tapis (30) suivant un programme préétabli en fonction des variations de la composition du mélange caillé-sérum et/ou du débit d'alimentation dudit mélange jusqu'à ce que ladite cloison (46) atteigne une position extrême correspondant au volume total du mélange de caillé et de sérum que le bac doit recevoir, le bac étant alimenté en permanence du début à la fin du remplissage.

2. Procédé selon la revendication 1, caractérisé en ce que la cloison (46) est déplacée en continu et sa vitesse de déplacement est réglée automatiquement en fonction des variations de la composition du mélange caillé-sérum et/ou du débit d'alimentation dudit mélange.

3. Procédé selon la revendication 1, caractérisé en ce que la cloison (46) est déplacée par intermittence et les temps de marche et/ou d'arrêt sont prédéterminés en fonction des variations de la composition du mélange caillé-sérum et/ou du débit d'alimentation dudit mélange.

4. Procédé selon la revendication 3, caractérisé en ce que les temps de marche diminuent du début à la fin de l'opération de remplissage.

5. Procédé selon la revendication 3 ou 4, caractérisé en ce que les temps d'arrêt augmentent du début à la fin de l'opération de remplissage.

6. Procédé selon la revendication 3, 4 ou 5, caractérisé en ce que toutes les périodes comportant un temps de marche et un temps d'arrêt ont la même durée.

7. Equipement pour le remplissage d'un bac à fromage de section rectangulaire comportant deux parois longitudinales (22), deux parois d'extrémité (24, 26), dont l'une est mobile pour permettre l'extraction du gâteau de caillé pressé, une paroi de fond perméable constituée par un tapis filtrant (30) et une cloison transversale (46) fixée sur l'extrémité du tapis filtrant (30) et déplaçable longitudinalement avec celui-ci, ledit équipement comprenant une rampe d'alimentation (70, 70') et une rehausse (60) placée sur ladite cloison (46), caractérisé en ce que la rampe d'alimentation (70, 70') est disposée transversalement près de la paroi mobile (26) du bac ou sur celle-ci, en ce qu'un automate programmable (45) est prévu pour commander le moteur (44) d'entraînement du tapis (30) et pour déplacer pendant le remplissage la cloison transversale (46) et la rehausse (60) depuis une position voisine de la paroi mobile (26) jusqu'à une position extrême correspondant au volume total du mélange de caillé et de sérum que le bac doit recevoir, et en ce que la rehausse (60) est montée sur des moyens de support mobiles (76) lui permettant de se déplacer avec la cloison le long du bac.

8. Equipement pour le remplissage d'un bac à fromage selon la revendication 7, caractérisé en ce que la rampe (70') est logée dans la paroi d'extrémité mobile (26) et incorporée à une paroi filtrante (27') doublant intérieurement ladite paroi d'extrémité (26).

9. Equipement pour le remplissage d'un bac à fromage selon la revendication 8, caractérisé en ce que la rampe (70') est raccordée à des tubes verticaux (72'), et des boisseaux (90) disposés à l'extrémité inférieure de ces tubes (72') contrôlent la communication entre lesdits tubes (72') et l'intérieur du bac, à travers des orifices (88) prévus dans la partie inférieure de la paroi filtrante (27').

10. Equipement pour le remplissage d'un bac à fromage selon la revendication 9, caractérisé en ce qu'il comporte des boisseaux tournants (90) fixés sur une barre horizontale (92) qui est supportée à ses extrémités par des bras montés sur la paroi filtrante (27') de façon à pivoter autour d'un axe horizontal et des moyens (94, 96) pour commander la rotation desdits bras.

**Claims**

1. Method for filling a rectangular cheese basin consisting of two longitudinal walls (22), two end walls (26, 24), one of which (26) is mobile to permit the discharge of the pressed drained curd, and a permeable bottom wall formed by a filtering mat (30) that can be moved longitudinally in the basin and comprising a transversal partition (46) attached to the end of the filtering mat (30) and movable with the latter, characterized by the fact that it consists in first bringing the transversal partition (46) next to the mobile end wall (26) of the basin at a predetermined distance from the latter, in then introducing the curd and whey mixture into the space between the said partition (46) and the said mobile end wall (26) and in finally moving the said partition (46) away from the said mobile wall (26) by controlling the mat (30) displacements in accordance with a preset programme as a function of the fluctuations of the composition of the curd — whey mixture and/or of the feed rate of the said mixture until the said partition (46) reaches an extreme position corresponding to the total volume of the curd and whey mixture which the basin must receive, the basin being fed permanently from the beginning to the end of the filling process.

2. Method according to in claim 1, characterized by the fact that the partition (46) is continuously moved and that its displacement speed is set automatically according to the fluctuation of the composition of the curd-whey mixture and/or of the feed rate of the said mixture.

3. Method according to claim 1, characterized by the fact that the partition (46) is moved intermittently and the running and/or stoppage times are preset according to the fluctuations of the composition of the curd-whey mixture and/or of the feed rate of the said mixture.

4. Method according to claim 3, characterized by the fact that the running times decrease from the beginning to the end of the filling operation.

5. Method according to claim 3 or 4, characterized by the fact that the stoppage times increase from the beginning to the end of the filling operation.

6. Method according to claim 3, 4 or 5, characterized by the fact that all the periods which include a running time and a stoppage time have the same duration.

7. Device for filling a rectangular cheese basin consisting of two longitudinal walls (22), two end walls (24, 26), one of which is mobile to permit the discharge of the pressed drained curd, a permeable bottom wall formed by a filtering mat (30) and a transversal partition (46) attached to the end of the filtering mat (30) and movable longitudinally with the latter, the said device comprising a feed manifold (70, 70') and a raising wall (60) placed on the said partition (46), characterized by the fact that the feed manifold (70, 70') is transversally positioned next to the mobile wall (26) of the basin or on this wall, that a programmable logic controller (45) is provided to control the drive motor (44) of the mat (30) and to move during the filling operation the transversal partition (46) and the raising wall (60) from a position next to the mobile wall (26) to an extreme position corresponding to the total volume of the curd and whey mixture which the basin is to receive, and that the raising wall (60) is mounted on mobile supports (76) which enable it to move with the partition along the basin.

8. Device for filling a cheese basin according to claim 7, characterized by the fact that the manifold (70') is located in the mobile end wall (26) and is an integral part of a filtering wall (27') which internally lines the said end wall (26).

9. Device for filling a cheese basin according to claim 8, characterized by the fact that the manifold (70') is connected to vertical tubes (72') and that valve plugs (90) located at the lower end of these tubes (72') control communication between the said tubes (72') and the inside of the basin, through openings (88) provided in the lower section of the filtering wall (27').

10. Device for filling a cheese basin according to claim 9, characterized by the fact that it includes rotating valve plugs (90) secured to a horizontal bar (92) which is supported at both ends by arms mounted on the filtering wall (27') so as to pivot around a horizontal axis and means (94, 96) to control the rotation of the said arms.

**Patentansprüche**

1. Verfahren zum Füllen eines Käsetroges mit rechteckigen Querschnitt, bestehend aus zwei Längswänden (22), zwei Endwänden (24, 26), von denen eine (26) zum Abzug des Kuchens von gepresstem Käsebruch beweglich ist, und einer durch lässigen Bodenwand, die durch einen im Trog längsversetzbaren Filterbelag (30) gebildet wird, sowie aus einer auf dem Ende des Filterbelags (30) befestigten und mit diesem versetzbaren Quertrennwand (46), dadurch gekennzeichnet, dass es darin besteht, zuerst die Quertrennwand (46) in die Nähe der beweglichen Endwand (26) des Troges in einer vorbestimmten Entfernung von dieser zu bringen, dann das Gemisch aus Käsebruch und Serum in den zwischen der Quertrennwand (46) und der beweglichen Endwand (26) gebildeten Raum einzuführen, und schliesslich die Quertrennwand (46) durch Wegrücken von der beweglichen Endwand (26) zu versetzen, indem die Bewegungen des Filterbelags (30) entsprechend einem vorbestimmten Programm in Abhängigkeit von den Anderungen der Zusammensetzung des Käsebruch-Serum-Gemisches und/oder der Aufgabemenge dieses Gemisches gesteuert werden, bis die Quertrennwand (46) eine Endstellung erreicht, die dem Gesamtvolumen des vom Trog aufzunehmenden Käsebruch-Serum-Gemisches entspricht, wobei der Trog von Anfang bis zu Ende des Füllvorgangs ständig versorgt wird.

2. Verfahren nach Anspruch 1, dadurch gekennzeichnet, dass die Quertrennwand (46) kontinuierlich versetzt wird, und ihre Bewegunsgeschwindigkeit in Abhängigkeit von den Anderungen der Zusammensetzung des Käsebruch-Serum-Gemisches und/oder der Aufgabemenge dieses Gemisches automatisch geregelt wird.

3. Verfahren nach Anspruch 1, dadurch gekennzeichnet, dass die Quertrennwand (46) intermittierend versetzt wird und die Lauf und/oder Stillstandszeiten in Abhängigkeit von der Zusammenstzung des Käsebruch-Serum-Gemisches und/oder der Aufgabemenge dieses Gemisches vorbestimmt sind.

4. Verfahren nach Anspruch 3, dadurch gekennzeichnet, dass die Laufzeiten von Anfang bis zu Ende des Füllvorgangs kürzer werden.

5. Verfahren nach Anspruch 3 oder 4, dadurch gekennzeichnet, dass die Stillstandszeiten von Anfang bis zu Ende des Füllvorgangs länger werden.

6. Verfahren nach Anspruch 3, 4 oder 5, dadurch gekennzeichnet, dass alle aus einer Laufzeit und einer Stillstandszeit bestehenden Zeiten die gleiche Dauer haben.

7. Vorrichtung zum Füllen eines Käsetroges mit rechteckigem Querschnitt, bestehend aus zwei Längswänden (22), zwei Endwänden (24, 26), von denen eine zum Abzug des Kuchens von gepresstem Käsebruch beweglich ist, einer durchlässigen Bodenwand, die durch einen Filterbelag (30) gebildet wird, und einer auf dem Ende des Filterbelags (30) befestigten und mit diesem längsversetzbaren Quertrennwand (46), wobei diese Vorrichtung eine Aufgaberampe (70, 70') und ein auf der Quertrennwand (46) angebrachtes Aufsetzblech (60) aufweist, dadurch gekennzeichnet, dass die Aufgaberampe (70, 70') in der Nähe der beweglichen Endwand (26) des Troges oder auf dieser quer angeordnet ist, dass ein programmierbares Steuergerät (45) vorgesehen ist, um den Antriebsmotor (44) des Belags (30) zu steuern und während des Füllvorgangs die Quertrennwand (46) und das Aufsetzblech (60) von einer Stellung in der Nähe der beweglichen Endwand (26) bis zu einer äusseren Stellung zu versetzen, die dem Gesamtvolumen des von Trog aufzunehmenden Käsebruch-Serum-Gemisches entspricht, und dass das Aufsetzblech (60) auf beweglichen Tragmitteln montiert ist, mit denen es mit der beweglichen Endwand entlang des Troges versetzt werden kann.

8. Vorrichtung zum Füllen eines Käsetroges nach Anspruch 7, dadurch gekennzeichnet, dass die Rampe (70') in der beweglichen Endwand (26) eingesetzt und in einer die Endwand (26) innen auskleidenden Filterwand (27') eingebaut ist.

9. Vorrichtung zum Füllen eines Käsetroges nach Anspruch 8, dadurch gekennzeichnet, dass die Rampe (70') mit senkrechten Rohren (72') verbunden ist, und am unteren Ende dieser Rohre (72') angeordnete Stopfen (90) die Verbindung zwischen diesen Rohren (72') und dem Troginneren durch im unteren Teil der Filterwand (27') vorgesehene Offnungen (88) steuern.

10. Vorrichtung zum Füllen eines Käsetroges nach Anspruch 9, dadurch gekennzeichnet, dass sie drehende Stopfen (90), die auf einem horizontalen Stab (92) befestigt sind, wobei dieser Stab an seinen Enden durch auf der Filterwand (27') montierte Arme getragen wird, so dass er sich um eine Horizontalachse drehen kann, sowie Steuermittel (94, 96) zur Drehung der Arme aufweist.

Fig. 1

Fig. 2

Coupe BB

Coupe CC

70'
72'
88
90
86

92

Coupe AA

92   72'   90

Coupe DD

70
96
27'
94
92

Fig. 3

A
B
72'
C
D
70'
27'
82
86
88
84
98
A

0 100 714